# EUROPÄISCHE PATENTANMELDUNG

(11) **EP 4 019 376 A1**
(43) Veröffentlichungstag der Anmeldung: **29.06.2022**
(21) Anmeldenummer: 21000169.9
(22) Anmeldetag: 25.06.2021
(51) Int. Cl.: B62J 9/23, B62J 9/27, B62J 7/08

(54) **TEILBARER VERBINDUNGSSTEG FÜR FAHRRADZUBEHÖR UND FAHRRADTASCHEN**

(30) Priorität: 22.12.2020 DE 202020005287 U
(71) Anmelder: de-Quadros, Heike, 23966 Wismar (DE)
(72) Erfinder: Die Erfindernennung liegt noch nicht vor
(74) Vertreter: ETL IP Patent- und Rechtsanwaltsgesellschaft mbH

(57) **Zusammenfassung**

Teilbarer Verbindungssteg für Fahrradzubehör und Fahrradtaschen welche mit Haken versehen und mittels eines Stegs verbunden sind, wobei der Verbindungssteg (1) aus zwei Seitenteilen (2), die fest mit der jeweiligen Rückwand (8) der beidseitig angeordneten Fahrradtaschen (4) verbunden sind, und aus einem Verbindungselement (3), das aus einer lösbaren Verbindung gebildet wird, besteht.

## Beschreibung

Zum Transport von verschiedenen Gütern an Zweirädern, wie zum Beispiel Fahrrad, Pedelec, EBike, usw., sind diese üblicherweise mit einem Gepäckträger ausgestattet. Es ist außerdem üblich zum Transport von Gütern, den Gepäckträger mit fest installiertem oder abnehmbarem Zubehör, insbesondere mit Fahrradtaschen, zu bestücken. Zur Befestigung der Fahrradtaschen, werden diese üblicherweise mit Haken ausgerüstet. Die beidseitig angeordneten Taschen können auch durch einen Steg verbunden werden, welcher auf dem Gepäckträger aufliegt.

Bei der Verwendung von Haken an abnehmbaren, durch einen Steg verbundenen Fahrradtaschen, ist die Nutzung der Taschen als Einzeltaschen nicht möglich. Aus der DE 20 2015 101 606 U1 ist ein Fahrradtaschensatz und dessen Seitentasche und Fahrradtasche bekannt, bei welcher an der am Gepäckträger angebrachten Gepäcktasche mittels Reißverschluss eine Seitentasche ausgefaltet werden kann.
Aus der DE 3618611 A1 ist eine Kombinationstasche bekannt, wobei die drei Einzeltaschen durch lösbare Verbindungen (Zwischenbahnen Lappen, Streifen, Bänder usw.) verbunden werden können. Zur Verbindung werden ausschließlich textile Materialien verwendet.
Aus der DE20 2007 011 990U1 ist eine Packtaschenanordnung für Zweiradgepäckträger bekannt, bei welcher zur Verbindung Riemen Verwendung finden. Die Riemen definieren die Auflage der Tasche auf dem Gepäckträger. Diese Taschen können zwar voneinander getrennt, aber nicht als Einzeltaschen genutzt werden.
Aus der DE 100 65975 ist ein Zweiradgepäckhalter bekannt, mit zwei an beiden Seiten im Bereich des Hinterrads hängenden Seitenteilen und ein die beiden Seitenteile verbindendes Oberteil.
Nachteilig an dieser Konstruktion ist die unlösbare Verbindung der Seitenteile. Aus der DE 20 2006 013 313U1 ist eine Tasche mit Tragegriff bekannt, bei welcher der Tragegriff schwenkbar ist, in Gebrauchsstellung am Fahrrad die Tasche überragt und in Ruhestellung am Taschenrücken anliegt. Nachteilig an dieser Tasche ist, dass sie nur als Einzeltasche genutzt werden kann.

Die Aufgabe dieser Erfindung besteht darin, eine teilbare Verbindung für Fahrradzubehör und Fahrradtaschen zu schaffen, mit welcher es ermöglicht wird bei Bedarf die mittels Steg verbundenen Taschen zu trennen, diese als Einzeltaschen zu nutzen, wobei die verbleibende Tasche stabil mit dem Gepäckträger verbunden bleibt.
Die Aufgabe der Erfindung wird durch einen Verbindungssteg 1 gelöst, der aus zwei Seitenteilen 2, die fest mit der jeweiligen Rückwand 8 der beidseitig angeordneten Fahrradtaschen 4 verbunden sind, und aus einem Verbindungselement 3 besteht, das aus einer lösbaren Verbindung gebildet wird.
Der Verbindungssteg 1, bei dem die zwei Seitenteile 2 durch das geschlossene Verbindungselement 3 fest miteinander verbunden sind, liegt mit seiner Unterseite auf dem Gepäckträger 6 auf. Die Taschen 4 sind dabei seitlich des Gepäckträgers 6 angeordnet. Dabei können die Taschen 4 durch die Haken 5 oder die Gepäckträgerklemme 7 auf dem Gepäckträger 6 gesichert werden.
Die ist Tasche 4 bei geöffneten Verbindungselement 3 durch die am Gepäckträger 6 eingedickten Haken 5 sicher befestigt.
In einer Auslegung der Erfindung besteht die lösbare Verbindung des Verbindungssteges aus einem teilbaren Reisverschluss.
In einer weiteren Auslegung der Erfindung ist die lösbare Verbindung des Verbindungssteges (1) als Druckknopfverbindung ausgebildet.
In einer weiteren Auslegung der Erfindung wird die lösbare Verbindung des Verbindungssteges (1) durch eine Klettverschlussbindung gebildet
In einer weiteren Ausbildung der Erfindung wird die lösbare Verbindung des Verbindungssteges (1) durch eine Hakenverbindung gebildet.

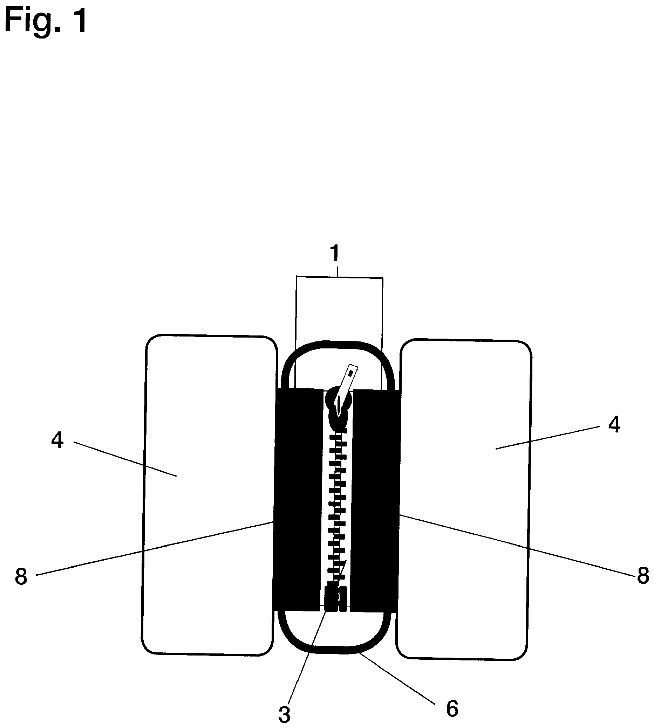

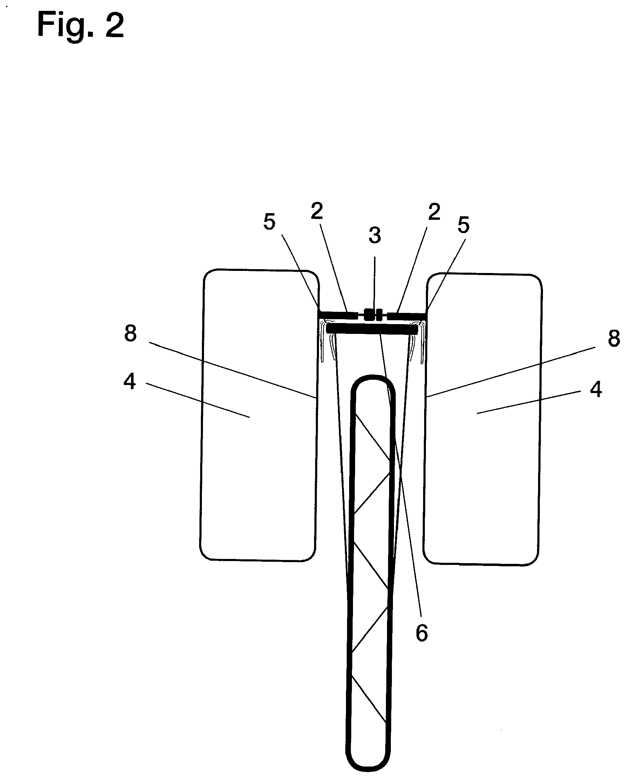

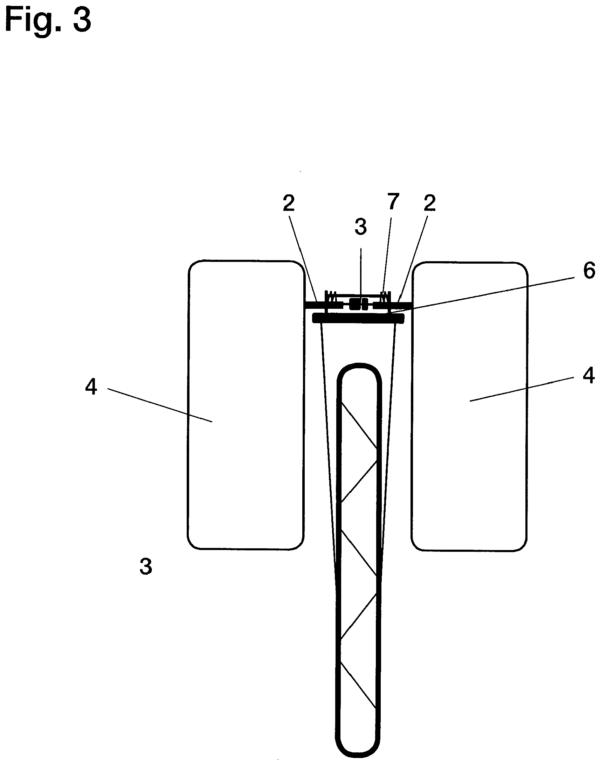

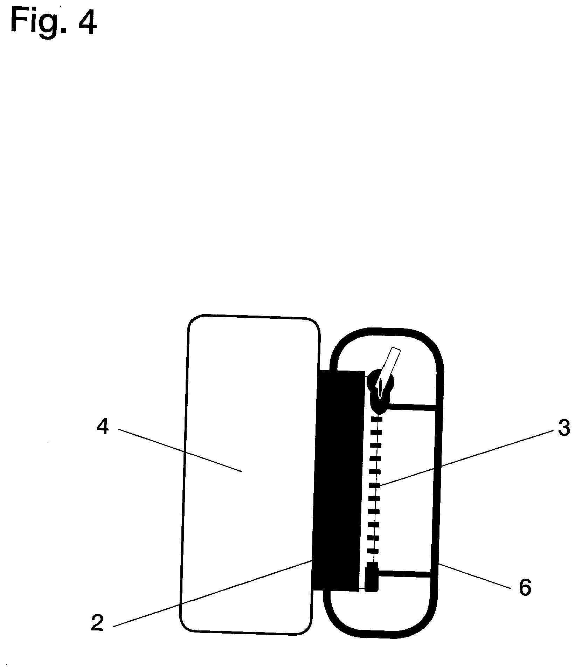

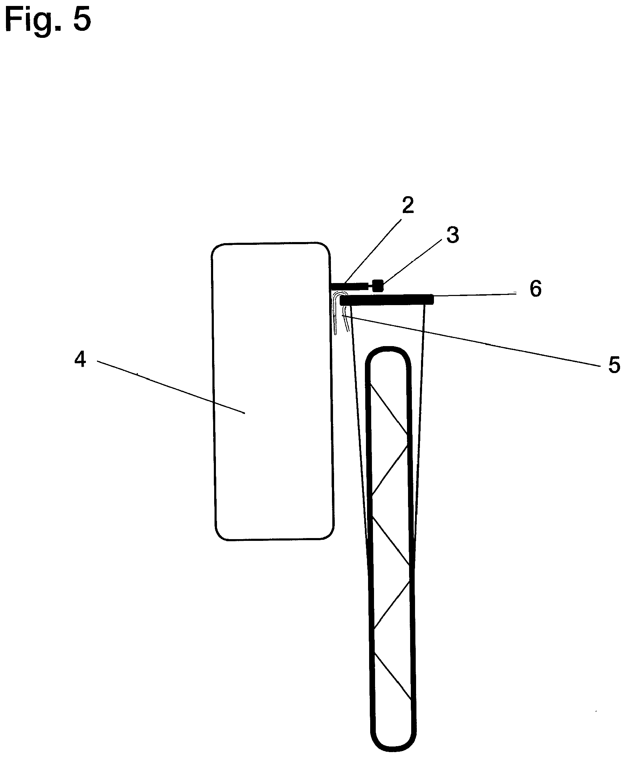

Die Fig. 1 zeigt dabei den Aufbau des Verbindungsstegs 1, die Fig. 2 und Fig. 3 stellen die Nutzung des Fahrradzubehörs oder Fahrradtaschen bei geschlossenem Verbindungssteg 1 dar und die Fig. 4 und Fig. 5 zeigen die Nutzung des Fahrradzubehörs oder Fahrradtaschen bei geteiltem Verbindungssteg, wobei
1 Verbindungssteg
2 Seitenteile
3 Verbindungselement
4 Fahrradtasche
5 Haken
6 Gepäckträger
7 Gepäckträgerklemme
8 Taschenrücken
bedeuten.

## Patentansprüche

1. Verbindungssteg (1) für Fahrradzubehör und Fahrradtaschen, welche mit Haken versehen und mittels eines Stegs verbunden sind, **dadurch gekennzeichnet, dass** der Verbindungssteg (1) aus zwei Seitenteilen (2), die fest mit der jeweiligen Rückwand (8) der beidseitig angeordneten Fahrradtaschen (4) verbunden sind, und aus einem Verbindungselement (3), das aus einer lösbaren Verbindung gebildet wird, besteht

2. Verbindungssteg (1) nach Anspruch 1, **dadurch gekennzeichnet, dass** die lösbare Verbindung als teilbare Reißverschlussverbindung ausgebildet ist.

3. Verbindungssteg (1) nach Anspruch 1, **dadurch gekennzeichnet, dass** die lösbare Verbindung des Verbindungssteges (1) als Druckknopfverbindung ausgebildet ist.

4. Verbindungssteg (1) nach Anspruch 1, **dadurch gekennzeichnet, dass** die lösbare Verbindung des Verbindungssteges (1) als Klettverschlussverbindung ausgebildet ist.

5. Verbindungssteg (1) nach Anspruch 1, **dadurch gekennzeichnet, dass** die lösbare Verbindung des Verbindungssteges (1) als Hakenverbindung ausgebildet ist.

6. Verbindungssteg (1) nach Anspruch 1- 5, **dadurch gekennzeichnet, dass** die Seitenteile (2) des Verbindungsstegs (1) fest mit den Rückwänden (8) der Fahrradtaschen (4) verbunden sind.

7. Verbindungssteg (1) nach Anspruch 1- 5, **dadurch gekennzeichnet, dass** das Fahrradzubehör und die Fahrradtaschen sowohl als Doppeltaschen mit Verbindungssteg (1) wie auch als Einzeltaschen genutzt werden können
